# EUROPÄISCHE PATENTSCHRIFT

(11) **EP 0 984 297 B1**
(45) Veröffentlichungstag und Bekanntmachung des Hinweises auf die Patenterteilung: **19.03.2003**
(21) Anmeldenummer: 99114509.5
(22) Anmeldetag: 23.07.1999
(51) Int. Cl.: G01S 7/40, G01B 11/27

(54) **Einstellgerät zum Justieren eines Abstandssensors**
Apparatus for adjustment of a distance sensor
Dispositif pour ajuster un détecteur de distance

(30) Priorität: 04.09.1998 DE 19840307
(43) Veröffentlichungstag der Anmeldung: 08.03.2000
(73) Patentinhaber: ROBERT BOSCH GMBH, 70442 Stuttgart (DE)
(72) Erfinder: Baeuerlen, Hans-Juergen, 70839 Gerlingen (DE); Foerschle, Mathias, 74177 Bad Friedrichshall (DE); Haaga, Gerhard, 73275 Ohmden (DE); Gustain, Romuald, 73207 Plochingen (DE); Kellner, Kai-Uwe, 34212 Melsungen (DE)

(56) Entgegenhaltungen:
- DE-A- 19 707 590
- DE-C- 4 201 214
- US-A- 5 748 294

## Beschreibung

### Stand der Technik

Die Erfindung bezieht sich auf ein Einstellgerät zum Justieren eines an einem Gegenstand, insbesondere einem Fahrzeug, montierten Abstandssensors mit einem bezüglich des Abstandssensors in horizontaler, vertikaler und Abstandsrichtung bewegbaren sowie in seiner vertikalen Neigung verstellbaren, an einem Traggestell angebrachten planen Reflektor.

Ein derartiges Einstellgerät ist in der nicht vorveröffentlichten deutschen Patentanmeldung Nr. 197 07 590 angegeben. Hierbei wird das Sensorsignal in Form eines Radarsignals auf einen in einem gewissen Abstand davor angeordneten, zum Beispiel planen Reflektor gerichtet und das von dem Reflektor zurückgeworfene Signal mit dem Empfänger des Sensors und einer Auswerteeinrichtung erfaßt, um die richtige Ausrichtung des Abstandssensors aufgrund der erfaßten Signale des Richtdiagramms in Form der Radarkeule zu bestimmen und erforderlichenfalls zu justieren. Hierzu kann beispielsweise auf das Maximum der Radarkeule justiert werden oder aber auf außerhalb des Maximums liegende ausgeprägte Symmetriepunkte, wozu insbesondere ein Tripel- oder Cornerreflektor vorgeschlagen wird, weil dabei der Verlauf des Empfangspegels im Bereich des Maximums relativ flach ist. Auch ist angegeben, die Justierung des Abstandssensors in horizontaler und in vertikaler Richtung nacheinander und unabhängig voneinander vorzunehmen. Der Reflektor ist in seiner vertikalen Neigung nach vorne oder nach hinten kippbar; zu dem Aufbau der Verkippvorrichtung sind jedoch keine Angaben gemacht.

Der Erfindung liegt die Aufgabe zugrunde, ein gattungsgemäßes Einstellgerät bereitzustellen, das bei robustem Aufbau einfach bedienbar und insbesondere auch für den Werkstattbetrieb geeignet ist.

Diese Aufgabe wird mit den Merkmalen des Anspruchs 1 gelöst. Hiernach ist eine Vorgabeeinrichtung für eine definierte Einstellung des Neigungswinkels sowie eine Nullpunktbestimmungseinrichtung für die vertikale Lage des Reflektors vorgesehen. Mit diesen Maßnahmen kann ausgehend von einer exakten vertikalen Lage ein definierter Kippwinkel nach vorn und nach hinten einfach und genau reproduzierbar eingestellt werden, auch wenn der Werkstattboden nicht exakt horizontal und eben ist.

Ein einfacher, stabiler Aufbau für eine definierte Einstellung des Kippwinkels besteht darin, daß der Halter zur Nullpunkteinstellung verstellbar und festlegbar ist. Der Halter mit den Anschlägen oder Rastelementen kann beispielsweise mittels einer Rändelschraube verstellt werden, um den Reflektor in die vertikale Nullpunktstellung zu bringen. Danach sind die beiden festen Kippwinkel, einer nach vorn und einer nach hinten, durch die beiden Anschläge bzw. Rastelemente festgelegt.

Eine weitere Möglichkeit, den Nullpunkt und die beiden Kippwinkel einzustellen, ergibt sich durch einen Aufbau derart, daß die Vorgabeeinrichtung für den Neigungswinkel einen Tarierstab mit einem Gewicht aufweist, daß der Tarierstab in einem Verstellteil und/oder das Gewicht entlang des Tarierstabs zur Gewichtsverlagerung verstellbar sind/ist und daß der in Kipprichtung starr mit dem Tarierstab verbundene oder verbindbare Reflektor in Kipprichtung pendelnd gelagert ist. Wird der Drehmomentstab in Form des Tarierstabs mit dem Gewicht nach vorn gerichtet, so neigt sich der damit hinsichtlich der Kippbewegung starr verbundene Reflektor nach vorn, indem der untere Rand nach hinten schwenkt. Wird der Tarierstab mit dem Gewicht hingegen von dem Abstandssensor weg nach hinten gerichtet, so neigt sich der Reflektor gegenüber der vertikalen Ausrichtung nach hinten, indem sich der untere Rand nach vorn bewegt. Der Kippwinkel kann dabei durch Verschiebung des Gewichts vorgegeben werden, wobei z.B. Werte zwischen 1 ° und 4° gegenüber der Vertikalen in Betracht kommen. Ist der im wesentlichen horizontal gelagerte Tarierstab parallel zur Ebene des Reflektors angeordnet, so pendelt der Reflektor von selbst in die vertikale Lage. Diese Einstellungen des Reflektors werden dadurch erzielt, daß der im wesentlichen horizontal gelagerte Tarierstab zur Nullpunkteinstellung in eine parallel zu dem Reflektor verlaufende Richtung und zum Einstellen der beiden Kippwinkel um 90° nach vorn und nach hinten in vorgegebene Stellungen schwenkbar ist, so daß das Gewicht einmal vor und einmal hinter der. Kippachse positioniert ist.

Zum Einstellen und Kontrollieren zumindest der vertikalen Ausrichtung des Reflektors ist vorgesehen, daß mittels der Nullpunktbestimmungseinrichtung zumindest der vertikale Neigungswinkel λ=0 anzeigbar ist. Wird dabei nicht nur der vertikale Neigungswinkel angezeigt, sondern auch die beiden Kippwinkel, so kann bei Lageänderung des Einstellgeräts stets auch überprüft werden, ob die beiden Kippwinkel noch eingehalten sind, und es kann erforderlichenfalls eine Korrektur vorgenommen werden.

Der Reflektor kann aus einer Aluminiumplatte bestehen oder aus einer kostengünstigeren Blechplatte, die ebenfalls gute Ergebnisse liefert und auf einfache Weise plan hergestellt werden kann.

Um eine Ausrichtung des Einstellgeräts orthogonal zur Fahrzeuglängsachse auf einfache Weise vornehmen zu können, ist vorgesehen, daß es als Ausrichtvorrichtung zu seiner Positionierung parallel zur Fahrzeuglängsachse einen Spiegel mit einer horizontalen und im ausgerichteten Zustand senkrecht zur Fahrzeuglängsachse verlaufenden optischen Linie oder eine Laservorrichtung mit einer entsprechenden Linienoptik oder auf einer entsprechenden Linie liegenden Punkten aufweist, die gleichzeitig oder durch Verschwenken nur eines Punktlasers nacheinander auf das Fahrzeug projiziert werden. Auch der Einsatz von zwei schwenkbaren Punktlasern ist geeignet. Die Ausrichtung kann dabei mit Hilfe zweier symmetrisch zur Fahrzeuglängsachse angeordneter fester oder als Markierungen aufgebrachter Hilfspunkte vorgenommen werden. Dabei ist eine Laservorrichtung mit Linienoptik als Einstellhilfe günstig, jedoch kostenaufwendiger als eine Laservorrichtung mit zwei auf einer entsprechenden Linie ausrichtbaren Punkten. Derartige Punktlaser haben auch den Vorteil höherer Intensität, sind jedoch etwas schwieriger zu justieren. Auch ein Spiegel mit optischer Linie ist geeignet, aber hinsichtlich der Handhabung wegen der erforderlichen Peilung umständlicher.

Der Abstand zwischen dem Abstandssensor und dem Reflektor sowie die Ausrichtung zwischen Reflektormitte und Sensormitte kann dadurch einfach vorgenommen werden, daß eine Abstandseinstellvorrichtung zum Einstellen eines vorgegebenen Abstands zwischen dem Reflektor und dem Abstandssensor vorgesehen ist, der ein stabförmiges Element aufweist, das mit seinem einen freien Ende zu dem Abstandssensor reicht und an seinem anderen Ende eine Einhängevorrichtung zum Halten an dem Reflektor besitzt, wobei dieses Ende auf der Reflektormitte positioniert ist. Diese Einstellungen sind hinsichtlich der Genauigkeit weniger kritisch als die exakte Einstellung der vertikalen Lage und der beiden Kippwinkel des Reflektors und die Einhaltung der Orthogonalität zur Fahrzeuglängsachse.

Für den Aufbau und die Handhabung des Einstellgeräts sind weiterhin die Maßnahmen vorteilhaft, daß das Traggestell mit einer auf Rädern gelagerten Basis und einem darauf befestigten Ständer sowie einer Handhabe versehen ist.

Eine Vorrichtung, mit der beispielsweise auch eine Abweichung zwischen Geradeauslauf und Ausrichtung der Fahrzeuglängsachse berücksichtigt werden kann, besteht darin, daß die Vorrichtung zum Justieren des an dem Fahrzeug montierten Abstandssensors ein Einstellgerät des vorstehend beschriebenen Aufbaus sowie eine Achsvermessungseinrichtung umfaßt.

Ein vorteilhafter Aufbau der Vorrichtung besteht dabei darin, dass die Achsvermessungseinrichtung zum Erzeugen zweier rechtwinklig zu den Hinterrädern des Fährzeuges nach vorn gerichteter Strahlen zwei den Hinterrädern zugeordnete Projektoren aufweist und dass beidseitig neben dem Einstellgerät zwei Spiegel angeordnet sind, die die Strahlen der beiden Projektoren auf eine an dem Einstellgerät vorgesehene Skala zum Ablesen der horizontalen Einstellwinkel der beiden Hinterräder des Fahr-zeuges richten. Auf der Skala des Einstellgerätes kann dabei eine Abweichung der Ausrichtung des Einstellgerätes von der Richtung des Geradeauslaufs festgestellt und eine Justierung des Einstellgerätes entsprechend dem Geradeauslauf vorgenommen werden.

Ein geeigneter Aufbau sieht dabei vor, dass die Skala auf einer rechtwinklig nach hinten oder nach vorn gerichtete Skalenplatte oder Skalenleiste vorgesehen ist.

Ferner sind für die einfache Justierung und den einfachen Aufbau die Maßnahmen günstig, dass die Spiegel in einem Spiegelwinkel von 45° zur horizontalen Ausrichtung des Reflektors angeordnet sind. ist eine Achsvermessungseinrichtung vorgesehen, so kann die Ausrichtungvorrichtung für die Positionierung parallel zur Fahrzeuglängsachse fehlen.

Der Eindeutigkeitsbereich des Einstellgeräts bezüglich des vertikalen Kippwinkels und auch eines horizontalen Schwenkwinkels des Reflektors soll innerhalb einiger Grad liegen. Größere Verstellungen des Abstandssensors, beispielsweise nach einem Unfall, können zunächst in einer Grobjustierung korrigiert werden.

Die Erfindung wird nachfolgend anhand eines Ausführungsbeispiels unter. Bezugnahme auf die Zeichnungen näher erläutert. Es zeigen:
- Fig. 1: ein vor einem Fahrzeug mit einem Abstandssensor positioniertes Einstellgerät in seitlicher Ansicht,
- Fig. 2a) bis b): seitliche Ansichten des Einstellgeräts bei unterschiedlichem Kippwinkel eines Reflektors teilweise als Ausschnittdarstellung und
- Fig. 3: eine Anordnung des Einstellgerätes in Verbindung mit einer Vorrichtung zur Achsvermessung in Draufsicht.

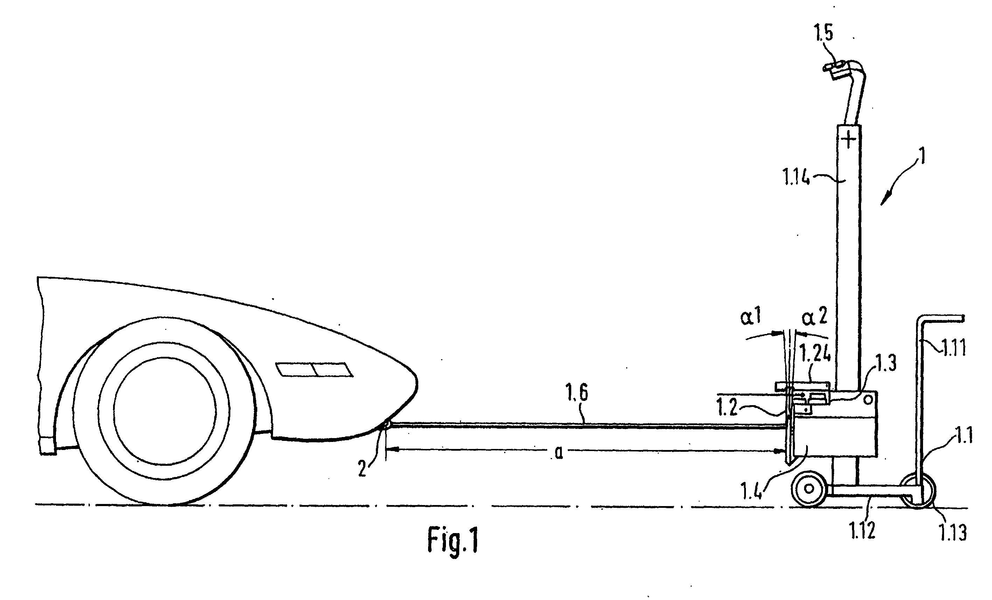

Die Fig. 1 zeigt ein Einstellgerät 1 mit einem Traggestell 1.1, das vor einem an einem Fahrzeug montierten Abstandssensor 2 aufgestellt ist.

Das Traggestell weist eine auf Rädern 1.13 fahrbar gelagerte Basis 1.12 auf, an der eine Handhabe 1.11 und auf der ein Ständer 1.14 angebracht sind. An dem Ständer 1.14 ist eine entlang desselben insbesondere in vertikaler Richtung verstellbare Haltevorrichtung 1.4 gelagert, die einen Reflektor 1.2 und ein mit diesem in Verbindung stehendes Meßgerät 1.3 trägt, mit dem der vertikale Neigungswinkel des Reflektors 1.2 erfaßbar und anzeigbar ist.

Am oberen Ende des Ständers 1.14 ist eine Ausrichtungvorrichtung 1.5 angeordnet, mit der die Orthogonalität des Einstellgeräts 1 mit dem Reflektor 1.2 bezüglich der Fahrzeuglängsachse überprüft und erforderlichenfalls durch Bewegen des Einstellgeräts 1 mit der Handhabe 1.11 hergestellt werden kann. Die Ausrichtvorrichtung 1.5 kann zum Beispiel einen Spiegel mit optischer Linie aufweisen, die zur Justierung in Deckung mit zwei symmetrischen Karosseriepunkten oder zwei aufgeklebten Marken gebracht wird. Alternativ ist die Ausrichtvorrichtung 1.5 vorteilhafterweise jedoch mit einer Laservorrichtung ausgerüstet, die eine Linienoptik aufweisen kann oder mindestens zwei auf einer entsprechenden Linie angeordnete Lichtpunkte beispielsweise mittels zweier Punktlaser erzeugt. Dabei können die beiden Punkte auch mittels eines oder zweier Punktlaser nacheinander durch Schwenken um eine Schwenkachse gebildet werden. Die Linienoptik ermöglicht ein einfacheres Ablesen, ist andererseits aber aufwendig und kann auch im Hinblick auf die Helligkeit gegenüber Punktlasern nachteilig sein.

Zum Einstellen eines vorgegebenen Abstands zwischen dem Abstandssensor 2 und dem Reflektor 1.2 sowie der Ausrichtung zwischen der Reflektormitte und der Sensormitte ist eine weitere Ausrichtvorrichtung 1.6 mit einem zwischen dem Reflektor 1.2 und dem Abstandssensor 2 angeordneten stabförmigen Element der Länge des Abstandes a und mit einer Einhängevorrichtung vorgesehen, mit der das stabförmige Element an dem oberen Rand des Reflektors 1.2 einhängbar ist, wobei das zugeordnete Ende des Stabs mittig auf dem Reflektor 1.2 ausgerichtet ist. Vorteilhaft und besonders gut für den Werkstatteinsatz geeignet ist hierbei eine Anordnung, bei der der Abstand einen Wert von < 2m aufweist.

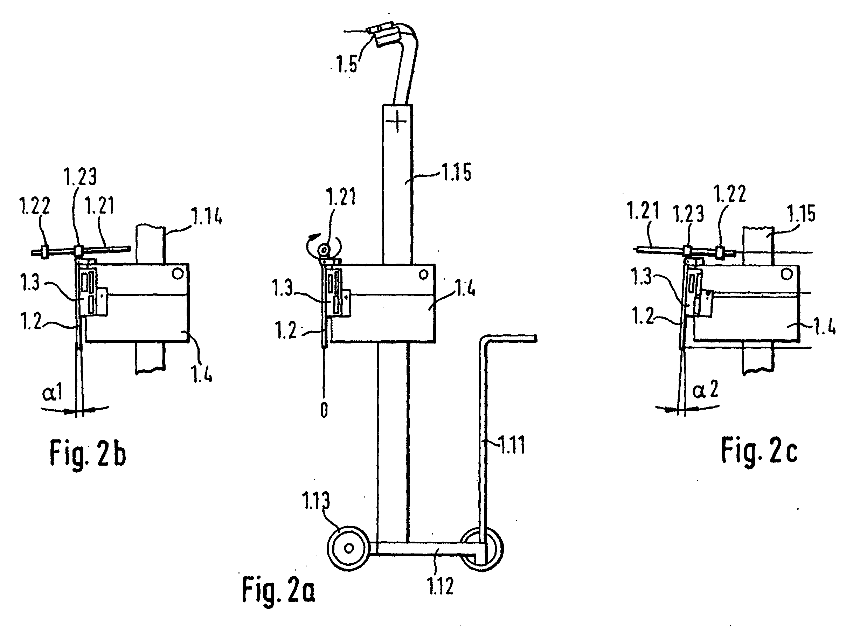

In den Fig. 2a) bis 2c) ist insbesondere die Ausrichtung des Reflektors 1.2 bezüglich der vertikalen Richtung dargestellt. In Fig. 2a) ist der Reflektor 1.2 exakt vertikal ausgerichtet, wobei ein im wesentlichen horizontal ausgerichteter Tarierstab 1.21 parallel zur Ebene des Reflektors 1.2, d.h. vorliegend in die Zeichenebene gerichtet, geschwenkt ist. Gemäß Fig. 2b) ist der Tarierstab 1.21 · mit einem daran verschieblich gelagerten Gewicht 1.22 nach vorne zu dem (nicht gezeigten) Abstandssensor 2 geschwenkt, so daß der pendelnd gelagerte Reflektor 1.2, der mit dem Tarierstab 1.21 hinsichtlich der Kippbewegung starr verbunden ist, um einen Kippwinkel α₁ nach vorne gekippt ist. Gemäß Fig. 2c) ist der Tarierstab 1.21 mit dem Gewicht 1.22 nach hinten geschwenkt, so daß der Reflektor 1.2 entsprechend um den Winkel α₂ nach hinten gekippt ist. Durch die Einstellung des Gewichts 1.22 und des durch den Tarierstab 1.21 mit dem Gewicht 1.22 gebildeten Drehmomentarm können die Kippwinkel α₁ und α₂ fest vorgegeben werden. Auch kann der Tarierstab 1.21 in einem Verstellteil 1.23 verschieblich und festlegbar gehalten sein. Die drei Schwenkstellungen des Tarierstabs 1.21 können beispielsweise durch entsprechende Nuten in der Haltevorrichtung des Verstellteils 1.23 eindeutig vorgegeben sein, so daß der Tarierstab 1.21 zum Verschwenken lediglich etwas gegen die Gewichtskraft angehoben, verschwenkt und in die neue Stellung abgelassen zu werden braucht. Die vertikale Nullpunktlage wird bei dieser Ausführungsform von selbst eingehalten wie auch die beiden Kippwinkel α₁ und α₂. Zusätzlich kann aber zur Kontrolle das Meßgerät 1.3 mit seiner Anzeige für den Neigungswinkel α herangezogen werden.

In Fig. 1 ist ein Halter 1.24 für den Reflektor 1.2 vorgesehen, der zwei feste Anschläge oder Rastelemente zum Einstellen der beiden Kippwinkel α₁ und α₂ sowie eine weitere Arretierstellung für die exakte vertikale Ausrichtung bzw. Nullpunkteinstellung aufweist. Die Nullpunkteinstellung kann beispielsweise mittels einer Rändelschraube, mit der der Halter 1.24 verstellt wird, justiert werden, wobei der Neigungswinkel α von dem Meßgerät 1.3 erfaßt und angezeigt wird. Auch die beiden Kippwinkel α₁ und α₂ können mit dem Meßgerät 1.3 angezeigt werden, wodurch sich auch bei einer Verstellung des Einstellgeräts 1 feststellen läßt, ob sich die Kippwinkel α₁ und α₂ geändert haben.

Mit den beiden einstellbaren Kippwinkeln α₁ und α₂ können anschließend definierte Punkte des vertikalen Richtdiagramms der Radarkeule beispielsweise durch den Empfänger des Abstandssensors 2 und mittels einer Auswerteeinrichtung erfaßt und die exakte Ausrichtung des Abstandssensors 2 vorgenommen werden, wobei sich die beiden Kippwinkeln α₁ und α₂ in Abhängigkeit von der Winkellage wegen der relativ scharfen Begrenzung des Richtdiagramms relativ stark ändern, so daß eine genaue Einstellung auf einfache Weise vorgenommen werden kann.

Anstelle einer Aluminiumplatte, die relativ hohen Aufwand bei der Herstellung erfordert, kann, wie sich bei Untersuchungen herausgestellt hat, mit gutem Erfolg auch eine verhältnismäßig kostengünstige Blechplatte verwendet werden.

Um eine Winkelabweichung zwischen Geradeauslauf der Räder und der Orientierung der Fahrzeuglängsachse zu berücksichtigen, kann das beschriebene Einstetigerät vorteilhafterweise in Verbindung mit einem Achsvermessungsprüfstand verwendet werden.

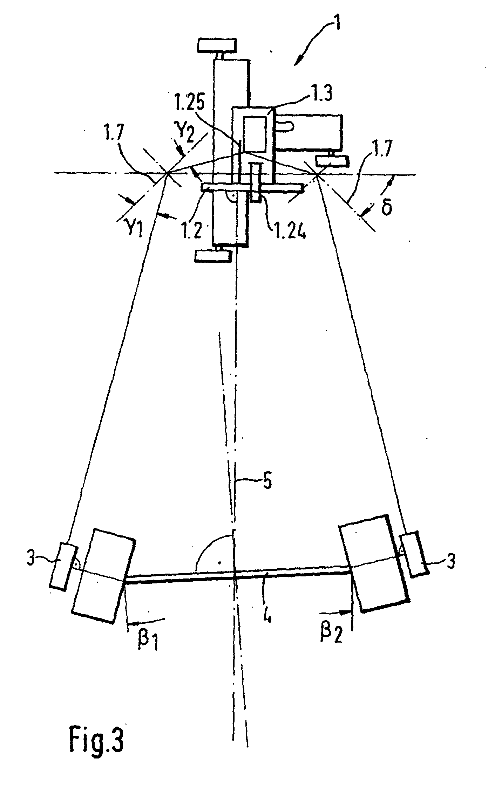

Fig. 3 zeigt eine Draufsicht einer Anordnung des Einstellgerätes 1 in Verbindung mit einer Achsvermessungseinrichtung. Die Achsvermessungseinrichtung weist rechtwinklig zur Rotationsachse der beiden Hinterräder angeordnete, bezüglich des Fahrzeugs nach vorn gerichtete Projektoren 3 auf. Die von den beiderseitigen Projektoren 3 nach vorne ausgesandten Strahlen treffen jeweils auf einen zugeordneten Spiegel 1.7 beiderseits des Einstellgerätes 1. Die Spiegel sind bezüglich der horizontalen Ausrichtung des Reflektors 1.2 nach vorne hin zu der den Geradeauslauf angebenden dynamischen Fahrachse 5 ausgerichtet, wie aus Fig. 3 ersichtlich. In der Horizontalen senkrecht zu dem Reflektor 1.2 ist auf einer Skalenplatte 1.25 eine Skala angeordnet, auf die die von den Spiegeln 1.7 abgelenkten Strahlen auftreffen. Mittels der Skala kann die Ausrichtung des Einstellgerätes 1 auf die dynamische Fahrachse 5 vorgenommen werden. In diesem Fall ist die dynamische Fahrachse 5 senkrecht zu dem Reflektor 1.2 ausgerichtet. Die dynamische Fahrachse 5 des Fahrzeuges wird nämlich bestimmt durch den Schnittpunkt der Verlängerungen der Spurlinien der Hinterräder des Fahrzeugs.

Durch Vergleich der Auftreffpunkte des linken und rechten Strahls auf der Skalenplatte kann die Ausrichtung des Einstellgerätes 1 durch einfaches Verändern der Gerätestellung erfolgen, bis der rechte Winkel zur dynamischen Fahrachse 5 erreicht ist. Die Spiegel 1.7 können dabei um eine vertikale Achse schwenkbar an dem Einstellgerät 1 angebracht sein.

Ist eine derartige Achsvermessungseinrichtung vorgesehen, so kann die Ausrichtvorrichtung 1.5 zur Positionierung parallel zur Fahrzeuglängsachse fehlen. Andererseits kann bei zusätzlichem Vorhandensein der Ausrichtvorrichtung 1.5 gleichzeitig auch eine Abweichung zwischen der Fahrzeuglängsachse und der dynamischen Fahrachse 5 bestimmt werden.

Mit dem beschriebenen Aufbau des Einstellgerätes sind also folgende Einstellungen des Abstandssensors möglich: senkrechte Lage bezüglich des Reflektors 1.2, Orthogonalität zur Fahrzeuglängsachse und auch zur dynamischen Fahrachse, Abstand zwischen dem Abstandssensor 2 und dem Reflektor 1,2 sowie die Ausrichtung des Abstandssensors 2 zur Reflektormitte.

## Patentansprüche

1. Einstellgerät (1) zum Justieren eines an einem Gegenstand, insbesondere einem Fahrzeug, montierten Abstandssensors (2) mit einem bezüglich des Abstandssensors (2) in horizontaler, vertikaler und in Abstandsrichtung bewegbaren sowie in seiner vertikalen Neigung verstellbaren, an einem Traggestell (1.1) angebrachten planen Reflektor (1.2) und mit einer Vorgabeeinrichtung (1.21, 1.22, 1.23; 1.24) und einer Nullpunktbestimmungseinrichtung (1.3) für eine definierte Einstellung des Neigungswinkels (α).

2. Einstellgerät nach Anspruch 1,
**dadurch gekennzeichnet,**
**dass** die Vorgabeeinrichtung für den Neigungswinkel (α) einen Halter (1.24) mit zwei Anschlägen oder Rastelementen zum Einstellen zweier fester Kippwinkel (α₁, α₂) auf gegenüberliegenden Seiten der Vertikalen aufweist und
**dass** der Halter (1.24) zur Nullpunkteinstellung verstellbar und festlegbar ist.

3. Einstellgerät nach Anspruch 1,
**dadurch gekennzeichnet,**
**dass** die Vorgabeeinrichtung für den Neigungswinkel (α) einen Tarierstab (1.21) mit einem Gewicht (1.22) aufweist,
**dass** der Tarierstab (1.21) in einem Verstellteil (1.23) und/oder das Gewicht (1.22) entlang des Tarierstabs (1.21) zur Gewichtsverlagerung verstellbar sind/ist und
**dass** der in Kipprichtung starr mit dem Tarierstab (1.21) verbundene oder verbindbare Reflektor (1.21) in Kipprichtung pendelnd gelagert ist.

4. Einstellgerät nach Anspruch 3,
**dadurch gekennzeichnet,**
**dass** der im wesentlichen horizontal gelagerte Tarierstab zur Nullpunkteinstellung in eine parallel zu dem Reflektor (1.2) verlaufende Richtung und zum Einstellen der beiden Kippwinkel (α₁, α₂) um 90° nach vorn und nach hinten in vorgegebene Stellungen schwenkbar ist, so dass das Gewicht einmal vor und einmal hinter der Kippachse positioniert ist.

5. Einstellgerät nach einem der vorhergehenden Ansprüche,
**dadurch gekennzeichnet,**
**dass** mittels der Nullpunktbestimmungseinrichtung (1.3) zumindest der vertikale Neigungswinkel α=0 anzeigbar ist.

6. Einstellgerät nach einem der vorhergehenden Ansprüche,
**dadurch gekennzeichnet,**
**dass** der Reflektor (1.2) aus Aluminium besteht oder als Blechplatte ausgebildet ist.

7. Einstellgerät nach einem der vorhergehenden Ansprüche,
**dadurch gekennzeichnet,**
**daß** es als Ausrichtvorrichtung (1.5) zu seiner Positionierung parallel zur Fahrzeuglängsachse einen Spiegel mit einer horizontalen und im ausgerichteten Zustand senkrecht zur Fahrzeuglängsachse verlaufenden optischen Linie oder eine Laservorrichtung mit einer entsprechenden Linienoptik oder auf einer entsprechenden Linie liegenden Punkten aufweist, die gleichzeitig oder durch Verschwenken nur eines Punktlasers oder zweier Punktlaser nacheinander auf das Fahrzeug projiziert werden.

8. Einstellgerät nach einem der vorhergehenden Ansprüche,
**dadurch gekennzeichnet,**
**dass** eine Abstandseinstellvorrichtung zum Einstellen eines vorgegebenen Abstands zwischen dem Reflektor (1.2) und dem Abstandssensor (2) vorgesehen ist, der ein stabförmiges Element aufweist, das mit seinem einen freien Ende zu dem Abstandssensor (2) reicht und an seinem am anderen Ende eine Einhängevorrichtung zum Halten an dem Reflektor (1.2) besitzt, wobei dieses Ende auf der Reflektormitte positioniert ist.

9. Einstellgerät nach einem der vorhergehenden Ansprüche,
**dadurch gekennzeichnet,**
**dass** das Traggestell (1.1) mit einer auf Rädern (1.13) gelagerten Basis (1.12) und einem darauf befestigten Ständer (1.14) sowie einer Handhabe (1.11) versehen ist.

10. Vorrichtung zum Justieren eines an einem Fahrzeug montierten Abstandssensors (2); die ein Einstellgerät (1) nach einem der vorhergehenden Ansprüche sowie eine Achsvermessungseinrichtung umfaßt.

11. Vorrichtung nach Anspruch 10,
**dadurch gekennzeichnet,**
**dass** die Achsvermessungseinrichtung zum Erzeugen zweier rechtwinklig zu den Hinterrädern des Fahrzeuges nach vorn gerichteter Strahlen zwei den Hinterrädern zugeordnete Projektoren (3) aufweist und
**dass** beidseitig neben dem Einstellgerät (1) zwei Spiegel (1.7) angeordnet sind, die die Strahlen der beiden Projektoren (3) auf eine an dem Einsteligerät (1) vorgesehen Skala (1.25) zum Ablesen der horizontalen Einstellwinkel (β1, β2) der beiden Hinterräder des Fahrzeuges richten.

12. Vorrichtung nach Anspruch 11,
**dadurch gekennzeichnet,**
**dass** die Skala auf einer rechtwinklig nach hinten oder nach vorn gerichtete Skalenplatte (1.25) oder Skalenleiste vorgesehen ist.

13. Vorrichtung nach Anspruch 11 oder 12,
**dadurch gekennzeichnet,**
**dass** die Spiegel (1.7) in einem Spiegelwinkel (δ) von 45° zur horizontalen Ausrichtung des Reflektors (1.2) angeordnet sind.

## Claims

1. Adjustment appliance (1) for adjustment of a distance sensor (2) which is mounted on an object, in particular a vehicle, having a planar reflector (1.2) which can be moved with respect to the distance sensor (2) in the horizontal, vertical and distance direction, has an adjustable vertical inclination and is fitted on a supporting framework (1.1), and having a preset device (1.21, 1.22, 1.23; 1.24) and a zero point determining device (1.3) for defined adjustment of the inclination angle (α).

2. Adjustment appliance according to Claim 1,
**characterized**
**in that** the preset device for the inclination angle (α) has a holder (1.24) with two stops or latching elements for adjustment of two fixed tilt angles (α₁, α₂) on opposite sides of the vertical, and
**in that** the holder (1.24) is adjustable and can be fixed for zero point adjustment.

3. Adjustment appliance according to Claim 1,
**characterized**
**in that** the preset device for the inclination angle (α) has a balance beam (1.21) with a weight (1.22),
**in that** the balance beam (1.21) can be moved in an adjustment part (1.23), and/or the weight (1.22) can be moved along the balance beam (1.21) in order to move the weight, and
**in that** the reflector (1.21), which is or can be rigidly connected to the balance beam (1.21) in the tilting direction, is mounted such that it can oscillate in the tilting direction.

4. Adjustment appliance according to Claim 3,
**characterized**
**in that** the essentially horizontally mounted balance beam for zero point adjustment can be pivoted in a direction which runs parallel to the reflector (1.2) and, for adjustment of the two tilt angles (α₁, α₂), can be pivoted through 90° to the front and to the rear to predetermined positions, so that the weight is positioned on the one hand in front of and on the other hand behind the tilting axis.

5. Adjustment appliance according to one of the preceding claims,
**characterized**
**in that** at least the vertical inclination angle α=0 can be indicated by means of the zero point determining device (1.3).

6. Adjustment appliance according to one of the preceding claims,
**characterized**
**in that** the reflector (1.2) is composed of aluminium, or is in the form of a metal plate.

7. Adjustment appliance according to one of the preceding claims,
**characterized**
**in that** said adjustment appliance, as an alignment apparatus (1.5) has, for its positioning parallel to the vehicle longitudinal axis, a mirror with a horizontal optical line which, in the aligned state, runs at right angles to the vehicle longitudinal axis, or has a laser apparatus with corresponding line optics or points which are located on a corresponding line and are projected onto the vehicle simultaneously or successively by pivoting only one point laser or two point lasers.

8. Adjustment appliance according to one of the preceding claims,
**characterized**
**in that** a distance adjustment apparatus is provided for setting a predetermined distance between the reflector (1.2) and the distance sensor (2), which has an element which is in the form of a rod whose free end extends as far as the distance sensor (2) and which, at its other end, has a hooking-in apparatus for holding on the reflector (1.2), with this end being positioned at the reflector centre.

9. Adjustment appliance according to one of the preceding claims,
**characterized**
**in that** the supporting framework (1.1) is provided with a base (1.12), which is mounted on wheels (1.13), and with a stand (1.14), which is attached to this base (1.12), as well as being provided with a handle (1.11).

10. Apparatus for adjustment of a distance sensor (2) which is mounted on a vehicle, which apparatus has an adjustment appliance (1) according to one of the preceding claims, as well as an axis measurement device.

11. Apparatus according to Claim 10,
**characterized**
**in that** the axis measurement device has two projectors (3), which are associated with the rear wheels, in order to produce two beams which point forwards at right angles to the rear wheels of the vehicle, and
**in that** two mirrors (1.7) are arranged on both sides alongside the adjustment appliance (1) and direct the beams from the two projectors (3) onto a scale (1.25), which is provided on the adjustment appliance (1), for reading horizontal adjustment angles (β1, β2) of the two rear wheels of the vehicle.

12. Apparatus according to Claim 11,
**characterized**
**in that** the scale is provided on a scale plate (1.25) or scale strip which points forwards or to the rear at right angles.

13. Apparatus according to Claim 11 or 12,
**characterized**
**in that** the mirrors (1.7) are arranged at a mirror angle (δ) of 45° to the horizontal alignment of the reflector (1.2).

## Revendications

1. Appareil de réglage (1) pour ajuster un capteur de distance (2) monté sur un objet, notamment un véhicule, comprenant d'un réflecteur plan (1.2) mobile par rapport au capteur de distance (2) dans les directions horizontale, verticale et en distance ainsi que dans son inclinaison verticale, ce réflecteur étant installé sur un châssis (1.1) et une installation de prédétermination (1.21, 1.22, 1.23, 1.24), une installation de détermination du point zéro (1.3) pour un réglage défini de l'angle d'inclinaison (α).

2. Appareil de réglage selon la revendication 1,
**caractérisé en ce que**
l'installation de prédétermination de l'angle d'inclinaison (α) comprend un support (1.24) avec deux butées ou éléments d'accrochage pour régler deux angles de basculement fixes (α₁, α₂) sur les côtés opposés de la direction verticale et
le support (1.24) se règle et se bloque par rapport au réglage du point zéro.

3. Appareil de réglage selon la revendication 1,
**caractérisé en ce que**
l'installation de prédétermination de l'angle d'inclinaison (α) comporte une tige de remise à zéro (1.21) avec un poids (1.22),
la tige de remise à zéro (1.21) étant réglable dans une pièce de réglage (1.23) et/ou le poids (1.22) le long de la tige de remise à zéro (1.21) pour déplacer le poids et
le réflecteur (1.21), relié ou susceptible de l'être, dans la direction de basculement, de manière rigide à la tige de remise à zéro (1.21), est monté en mouvement pendulaire dans la direction de basculement.

4. Appareil de réglage selon la revendication 3,
**caractérisé en ce que**
la tige de remise à zéro, montée essentiellement horizontalement par rapport au réglage du point zéro, peut être basculée dans une direction parallèle au réflecteur (1.2) et pour régler les deux angles de basculement (α₁, α₂) elle peut être basculée vers l'avant ou vers l'arrière de 90° dans des positions prédéterminées de façon que le poids se trouve une fois en avant et une fois en arriéra de l'axe de basculement.

5. Appareil de réglage selon l'une quelconque des revendications précédentes,
**caractérisé en ce que**
l'installation qui détermine le point zéro (1.3) indique au moins l'angle d'inclinaison vertical α=0.

6. Appareil de réglage selon l'une quelconque des revendications précédentes.
**caractérisé en ce que**
le réflecteur (1.2) est en aluminium ou est une plaque en tôle.

7. Appareil de réglage selon l'une quelconque des revendications précédentes,
**caractérisé en ce que**
le dispositif d'alignement (1.5) comporte, pour son positionnement, parallèlement à l'axe longitudinal du véhicule, un miroir avec une ligne optique horizontale et qui à l'état aligné, est perpendiculaire à l'axe longitudinal du véhicule, ou un dispositif laser avec une optique de ligne correspondante ou ayant des points situés sur une ligne correspondante et qui sont projetés en même temps ou par basculement de seulement un point du laser ou de deux points laser, successivement sur le véhicule.

8. Appareil de réglage selon l'une quelconque des revendications précédentes,
**caractérisé en ce qu'**
un dispositif de réglage de distance servant à régler une distance prédéterminée entre le réflecteur (1.2) et le capteur de distance (2) est prévu et comporte un élément en forme de tige dont l'extrémité libre est tournée vers le capteur de distance (2) et dont l'autre extrémité comporte un dispositif d'accrochage pour être fixé au réflecteur (1.2), cette extrémité étant positionnée sur le milieu du réflecteur.

9. Appareil de réglage selon l'une quelconque des revendications précédentes,
**caractérisé en ce que**
le bâti (1.1) comporte une embase (1.12) montée sur des roues (1.13) et un bâti (1.14) fixé à l'embase ainsi qu'une poignée (1.11).

10. Dispositif pour ajuster un capteur de distance (2) monté sur un véhicule, comprenant un appareil de réglage (1) selon l'une quelconque des revendications précédentes ainsi qu'une installation pour mesurer les axes.

11. Dispositif selon la revendication 10,
**caractérisé en ce que**
l'installation pour mesurer les axes génère deux faisceaux dirigés vers l'avant à l'équerre par rapport aux roues arrière du véhicule et comporte deux projecteurs (3) associés aux roues arrière et
de part et d'autre, à côté de l'appareil de réglage (1), il y a deux miroirs (1.7) qui dirigent les faisceaux des deux projecteurs (3) sur une échelle (1.25) prévue sur l'appareil de réglage (1), pour lire les angles de réglage horizontal (β1, β2) des deux roues arrière du véhicule.

12. Dispositif selon la revendication 11,
**caractérisé en ce que**
l'échelle est prévue sur une plaque graduée (1.25) ou barrette à graduation, dirigée à l'équerre vers l'arrière ou vers l'avant.

13. Dispositif selon l'une quelconque des revendications 11 ou 12,
**caractérisé en ce que**
les miroirs (1.7) sont disposés suivant un angle (δ) de 45° par rapport à l'alignement horizontal du réflecteur (1.2).
